# EUROPEAN PATENT APPLICATION

(11) **EP 2 608 144 A2**
(43) Date of publication of application: **26.06.2013**
(21) Application number: 12275216.5
(22) Date of filing: 21.12.2012
(51) Int. Cl.: G06Q 30/02, H04W 4/02, H04L 29/08, H04W 64/00, G06F 11/34

(54) **Mobile device user categorisation based on location statistics**

(30) Priority: 21.12.2011 GB 201121954
(71) Applicant: Vodafone IP Licensing Limited, The Connection Newbury Berkshire RG14 2FN (GB); International Business Machines Corporation, Armonk, NY 10504 (US)
(72) Inventor: Scarr, Kevin, Newbury, Berkshire RG14 2FN (GB); Pollington, David, Newbury, Berkshire RG14 2FN (GB); Hickman, Nichola, Newbury, Berkshire RG14 2FN (GB); Brennan, Damian, Winchester, Hampshire S021 2JN (GB); Mays, Richard, Winchester, Hampshire S021 2JN (GB)
(74) Representative: Ellis, Lyle John

(57) **Abstract**

Method and system for assigning a category to a user comprising the steps of: obtaining network usage records from a mobile network. Extracting cell information from the network usage records. Determining location information from the extracted cell information. Generating one or more user behaviour attributes from the determined location information. Assigning a user category to the user based on the determined one or more user behaviour attributes.

## Description

### Field of the Invention

The present invention relates to categorising mobile device users and especially categorising users of cell phones in terms of their movements and usage.

### Background of the Invention

Determining accurately how a person or group of people move and behave is useful for a variety of reasons. For example, such information may be used to plan infrastructure such as transport facilities. Information may be captured by conducting surveys such as those carried out by the UK department for transport, in order to understand how people travel. However, such surveys and other manual data collection techniques are expensive, unreliable and limited in sample size.

US 2010/0004997 describes a system for generating a user profile based on periodic location fixes. In this system, a GPS unit is carried by a cohort of users and these GPS units record the locations of each user at particular intervals. These location data are collected and analysed and used to generate user profiles based on identified visited locations and dwell times. However, GPS units rapidly consume battery power and so cannot be used for long periods or long journeys. Furthermore, it is not always easy to convince users to carry such a GPS unit to track their movements. Therefore, it may be unfeasible to recruit a large number of volunteers, resulting in small data sets, which limits reliability and accuracy.

Therefore, there is required a method that overcomes these problems.

### Summary of the Invention

Against this background and in accordance with a first aspect there is provided a method of assigning a category to a user comprising the steps of: obtaining network usage records from a mobile network; extracting cell information from the network usage records; determining location information from the extracted cell information; and assigning a user category to the user based on the determined location information. Therefore, categorisation or segmentation of users may be carried out for a larger customer or user base. Location and usage can be derived from network usage records, which can provide additional input into the categorisation assignment.

According to a further aspect there is provided a method and system for assigning a category to a user comprising the steps of: obtaining network usage records from a mobile network; extracting cell information from the network usage records; determining location information from the extracted cell information; generating one or more user behaviour attributes from the determined location information; and assigning a user category to the user based on the one or more user behaviour attributes. Optionally, the user category or categories may be further based on a set of user movements determined, generated, stored or built up from the determined location information. For example, user behaviour attributes may include any one or more of working, non-working, home, work place, travel time, transport mode, commute time, distance and proportion of day spent at particular locations, as well as others. In other words, user behaviour attributes may be used to determine or infer how and where a user operates, lives, studies, relaxes, holidays or works and what they are doing and for how long they carry out those actions or tasks. From these user behaviour attributes certain patterns may be identified or inferred. These patterns may include one or more user behaviour attributes. The patterns may include a proportion of user behaviour attributes (e.g. commute for 30 minutes, work for five hours and travel by car for 90% of journeys). Therefore, users with particular patterns may fall in to one or more categories. The categories may be based on predetermined boundaries or tolerances for user behaviour attributes in order to group similar users within the same category (e.g. all users who commute for greater than 20 minutes and travel by car for between 50% and 95% of their journeys).

Optionally, the location information may include time spent at the determined location. This may be used to improve the accuracy of categorisation by gaining additional information about users such as their home locations, work locations and where they spend their time or a significant proportion of their time.

Optionally, the location information may include a visit frequency of the determined location. This may further improve categorisation accuracy and reliability.

Preferably, the location information may include information from a plurality of locations. Such information may be collected over time.

Preferably, the category may be a mobility category. The category or categories may include different types such as those relating to types of travel, distance travelled, modes of transport used, volume of journeys undertaken and how a mobile device is used when travelling.

Optionally, assigning the user category may be further based on a plurality of determined locations spread over a time segment extracted from the cell information for the user.

Optionally, assigning the user category may further comprise detecting one or more modes of transport used by the user from the extracted cell information. This can provide an indication of the type of user and how they travel.

Optionally, detecting the one or more modes of transport may further comprise the steps of: identifying the network usage records originating from moving handsets from the extracted cell information; and matching the identified network usage records with one or more transport modes. Therefore, the categorisation may be based more closely on the type of transport used.

Optionally, matching the identified network usage records may further comprise comparing the locations of cellular base stations recorded in the identified network usage records with predetermined transport routes. These predetermined or existing transport routes may be stored in a suitable format for searching and comparing such as a database or file, for example.

Preferably, the predetermined transport routes may be scheduled transport routes. These may include bus, train, aircraft, tram and water based transport routes, for example.

Optionally, assigning the user category may be further based on a travel distance calculated from the determined location information.

Optionally, assigning the user category may be further based on a distribution of determined locations.

Optionally, assigning the user category may be further based on time information extracted from the network usage records.

Optionally, assigning the user category may be further based on the most common determined location information for the user. This may indicate home or work locations, for example.

Optionally, the method may further comprise the step of calculating a radius of gyration of the determined location information and wherein assigning the user category is further based on the calculated radius of gyration.

Preferably, the network usage records may be selected from the group consisting of: call detail records, event detail records; IP detail records; usage detail records; and xDR records.

Optionally, assigning the user category may be further based on an event type. In particular, the user category may be based on a combination of detected mode of transport and/or locations and a type of event undertaken. For example, the user category may be based on making a call (an event type) in a car or downloading data on a train. Other combinations may also be used.

Optionally, the method may further comprise the step of sending one or more messages to one or more users based on their user category. In other words, each user in a particular user category may be sent a message relating to that category. This message may be in the form of data or SMS, for example. The message may contain advertising or other material.

The method described above may be implemented as a computer program comprising program instructions to operate a computer. The computer program may be stored on a computer-readable medium.

Furthermore, the method may be implemented as a computer program operating on a computer system such as a network, server or group of servers with suitable memory storage and database resources.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows an example file structure of a network usage record;
FIG. 2 shows a flow chart illustrating a method of assigning a category to a user, given by way of example only;
FIG. 3 shows a schematic diagram of a system for carrying out the method of fig. 2;
FIG. 4 shows a flowchart illustrating in further detail the method of assigning a category to a user of fig. 2 including an algorithm for inferring a mode of transport;
FIG. 5 shows a flowchart of the steps of the algorithm for inferring the mode of transport of fig. 4;
FIG. 6 shows a flowchart illustrating the steps of the algorithm of fig. 5 in further detail; and
FIG. 7 shows a flow chart of a method used to provide a confidence level of results produced from carrying out the algorithm of FIG. 6.

It should be noted that the figures are illustrated for simplicity and are not necessarily drawn to scale.

### Detailed description of the preferred embodiments

Mobile operators may collect network usage records (NUR) that contains information about call events including telephone calls, SMS and mobile data retrieval (amongst other types). The NUR data include information about where the call was initiated and terminated, its duration and the parties (or telephone numbers) involved in the particular event. These data may be used by a billing system to account for events initiated by a subscriber using a handset or other mobile device.

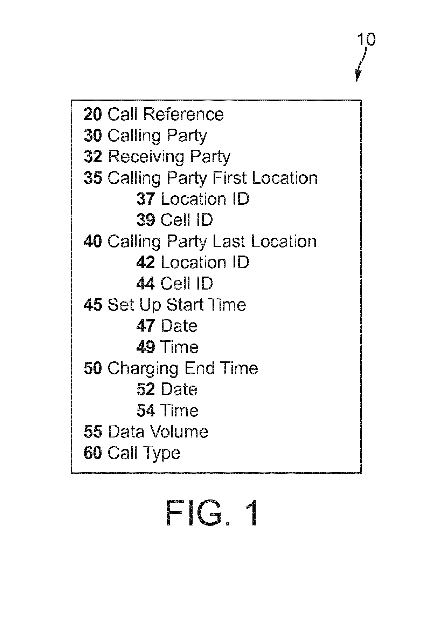

Figure 1 shows an example file structure of a network usage records (NUR) 10 indicating some of the data fields that may be present in such a record. Other data fields that may be present or the data fields may have different names or structure. The call reference 20 provides an identifier for the NUR record. The calling party 30 is an identifier for the mobile device and may be the device's or SIM's telephone number, for example. The receiving party field 32 indicates the destination of the call. The calling party first location 35 contains two subfields 37 and 39 indicating the location ID and cell ID specifying details of where the call is initiated. Similarly, the calling party last location 40 contains two subfields 42 and 44 specifying the location ID and cell ID where the call was terminated. Where the calling party is moving between cells during a call the first location and last location may be different. The set up start time 45 contains subfields date 47 and time 49. Charging end time 50 defines the date 52 and time 54 at the end of the call. Data volume 55 indicates how much data was transmitted and/or received if this was a data call. Such a field may be absent or blank for non-data calls. Field 60 describes the call type which may be a voice call, an SMS or a data transfer, for example. Other call types may be included.

Although the term "call" has been used, this may be a generic term to describe an event that may occur or be provided to a mobile device such as a cell phone. Other events may be stored within NUR records. For example, an active mobile device moving between cells may have this handover recorded even though no call is made during this handover. Nevertheless, such an event or set of events may be used to determine the location and speed of a particular mobile device. Furthermore, average journey times for particular routes or sets of routes may be determined from analysing many events as recorded in NUR records.

Where the calling party first location 35 and calling party last location 40 are different locations, then this indicates that the mobile device has moved during the call. Other cell IDs may be stored within the NUR indicating handoff between different cells during the call in addition to the first and last locations. The set up start time 45 and charging end time 50 may be used to determine the call duration. As the location IDs typically relate to fixed locations of cell base stations and these may be known from a database of such locations, then the distance travelled during the call by the mobile device (or an estimation of this distance) together with the duration of the call may be used to calculate travel speed or average travel speed during the call. As the density of cells increases so does the accuracy of the calculated travel speed. However, even for spaced apart cells a suitable approximation of travel speed may be derived.

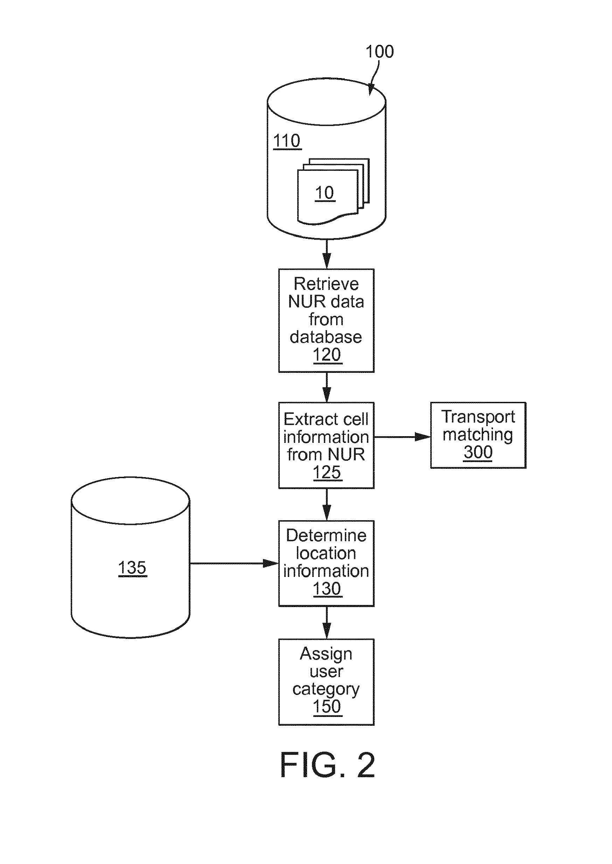

Figure 2 shows a flowchart of a method 100 for assigning a category to a user 100. This method 100 is illustrated in high level terms in figure 2, which shows only the main steps but does not show particular implementations of the steps, which are shown in detail in further figures.

A database 110 contains a plurality of NUR records 10. This NUR database 110 may be populated by a mobile network or contained within such a network (not shown in this figure). At step 120, NUR data are retrieved from the database 110. Cell information may be extracted from the NUR records at step 125. This cell information may include cell ID and/or cell location ID, for example.

At step 130, locations are mapped to the extracted cell information for particular events relating to the retrieved NUR records. A database 135 or other source may be used to provide specific locations relating to the extracted cell information so that actual locations may be determined for particular users. This information may be used to determine that particular events related to static calls where the user was not moving during a particular event (i.e. only a single cell location ID or cell ID was mentioned in the NUR). This information may be used to determine the movement of a particular user as the first location and the last location may be different. Where a movement occurred, then an inference may be made regarding the mode of transport that was used. A set of movements and user behaviour attributes may be built up to provide an indication relating to the types of users that are making and potentially receiving calls or generating recorded events stored in database 110.

At step 150, the inferred and derived user details and behaviours may be used to assign particular categories to individual users or groups of users. Such categories may include the level of mobility (based on the volume of moving events) and the volume and types of mobile events that are generated by particular users. Where large numbers of mobile events generated by particular users are recorded for the same location or locations, then these may relate to particular user locations that are significant, such as their home and workplace, for example. Therefore, further categories may be assigned based on whether a user is working or not and how long each day or week they work. Categories may include the type of home or work place, for example. Categories may include the types and use of different transport types. Other categories may be assigned.

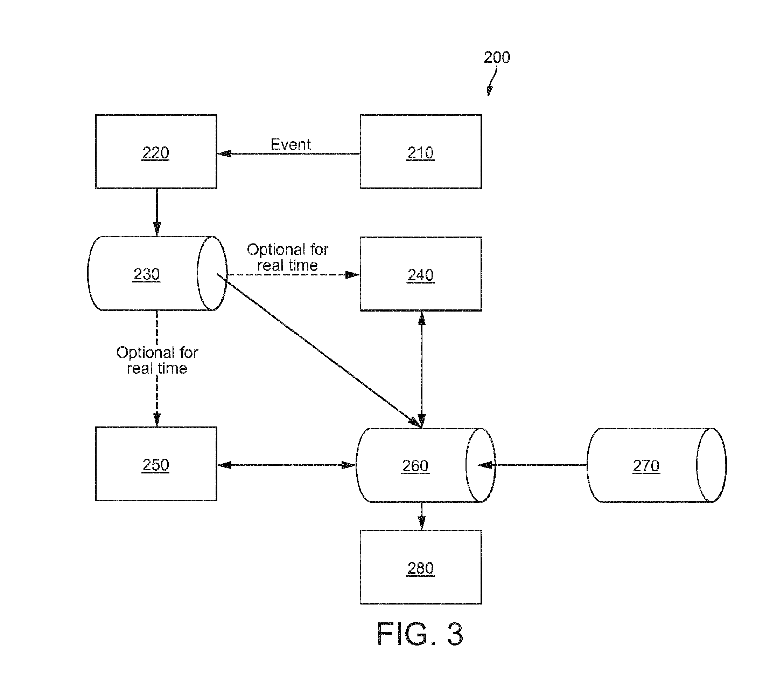

Figure 3 shows a schematic diagram of system components used to implement the described methods. These components form a system 200 including a mobile device 210 that may be used to initiate an event by communicating with a base station or cell 220, which generates live data stored on database 230. The live data may be archived in a data warehouse 260. A central processor 240 processes data from database 230 and data warehouse 260 to execute computer programs or algorithms that run the described methods. Additional database 270 may provide additional data that may include a transport database 135 to provide specific locations. An additional central processor unit 250 may execute other analytical procedures or algorithms that are not described in detail here. A display unit or output unit 280 may provide visualisation of the method results or provide an application programming interface so that such results may be used by other programs or systems. The processors and databases may be formed from a network or contained within logical or physical servers operating on suitable operating systems such as UNIX, Windows (RTM) or Linux, for example. The databases may use Oracle, SQL Server or DB2, for example.

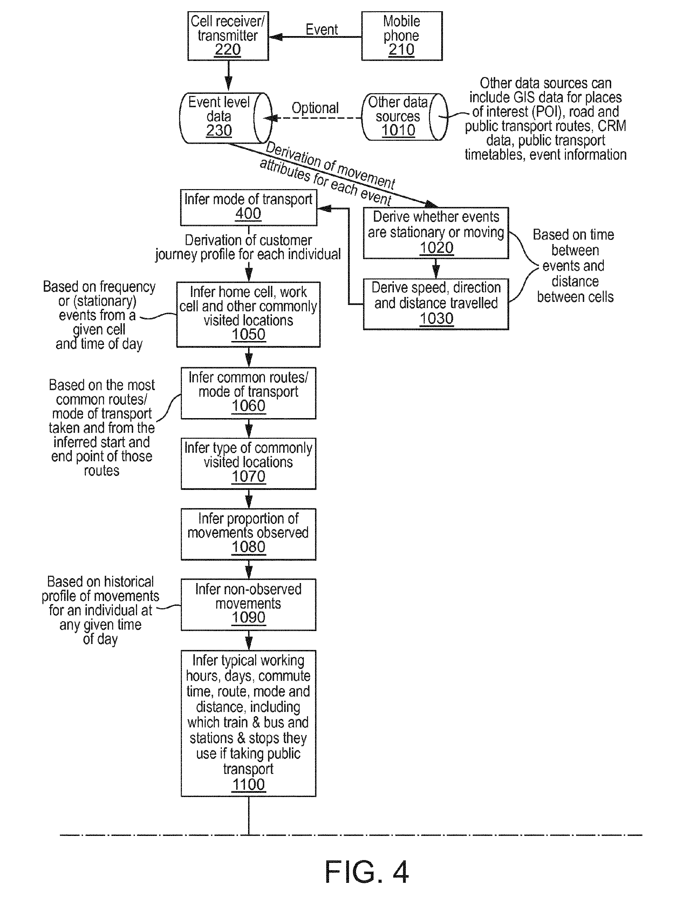

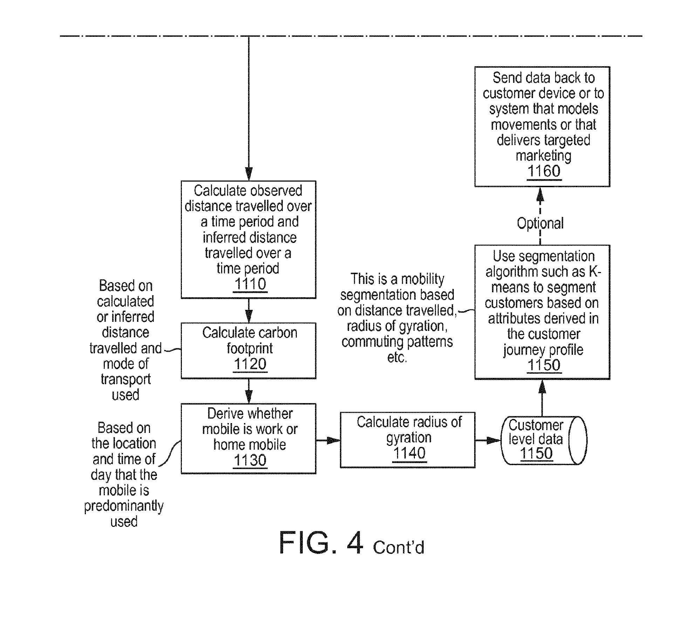

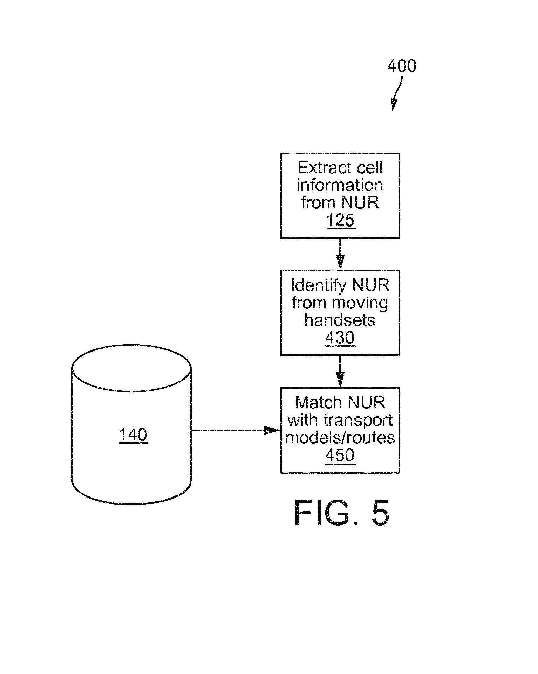

Figure 4 shows a flowchart illustrating schematically and in more detail the method or algorithm for assigning a user category 1000. The events generated or relating to a mobile phone 210 or other mobile device are processed by the cell receiver/transmitter 220. The generated live data may be stored in a database 230. These data may be supplemented by other data sources in database 1005. These other data sources may include geographic information system (GIS) data for places of interest (POI), road and public transport routes, customer relationship management (CRM) data, public transport timetables, event information and any other data sources. The NUR records 10 may be analysed to determine whether particular events occurred with the mobile phone 210 (or mobile device) being stationary or moving at step 1020. This result may be derived from the timings of events and the distance between recorded cells, and whether or not the first cell and last cell are the same or different. For moving events, the speed, direction and distance travelled may be determined at step 1030. From this information, the particular mode of transport may be inferred at step 400. Further details of the sub-steps of this inference step are described with reference to figure 5. At step 1050, the particular users' home cells, work cells and commonly visited locations may be inferred or determined. This may be based on a frequency of stationary events for a given cell and time of day for particular users or groups of users, for example.

Common routes and/or modes of transport may be inferred at step 1060. This inference may be based on common or most common routes and/or modes of transport with calculated start and end points of these particular routes. Commonly visited locations and their types may be inferred at step 1070. The proportion of observed movements may be calculated or inferred at step 1080. Non-observed movements may be inferred at step 1090 and this may be based on historical profiles of movements for individuals at any given time of day. Typical working hours for particular users may be inferred at step 1100. This information may be determined from typical working hours, days, commute time, route, mode and distance.

The total observed distance may be calculated for particular periods of time for users at step 1110. The carbon footprints for particular users or groups of users may be calculated at step 1120 and this may be based on calculated or inferred travel distance and determined modes of transport.

A determination may be made as to whether the mobile device is a work or home mobile, or cell phone at step 1130. Such a derivation may be based on the location and time of day that the mobile device is predominantly or most commonly used. The radius of gyration for particular users may be calculated at step 1140. An example of such a calculation may be found in M. Gonzalez, C. Hidalgo, and A.-L. Barabasi, "Understanding individual human mobility patterns," Nature, vol. 453, no. 7196, pp. 779-782, 2008.

Step 1150 assigns or calculates users to particular categories based on the inferred or calculated attributes generated in the previous steps. Additionally, customer level data stored in database 1150 may be used as a further input for such categorisation assignment. The categories may be based on thresholds for particular calculated or inferred attributes or groups of attributes, which may be weighted according to significance.

User categories may be assigned on the basis of matching a number of commonly co-occurring derived and inferred attributes (such as those described with reference to figure 4, such as different combinations of distance, diversity in direction of and frequency of travel), where the user is assigned to the category which represents the shortest distance from their attributes to the cluster centre in the n dimensional space described by n attributes scaled from 0-1. Alternatively this may be based on predetermined cut-offs for derived or inferred attributes which may be either single variables or a number of pre-defined variables that are not necessarily co-occurring (e.g. frequency, % type of event, attendance at a particular location at a particular time, such as at a football match, use of a particular mode of transport, e.g. rail commuter).

In certain circumstances, at step 1160 the categorisation data may be sent back to the mobile device or to other systems for further use.

Any combination, a subset or all of the inference or calculation steps described with reference to figure 4 may be used when generating or assigning categories to users or customers. For example, some types of categories may use particular inference steps that are not used for others. Furthermore, users may be assigned more than one category.

Figure 5 shows a flow diagram illustrating the method or algorithm 400 described with reference to figure 4 for inferred modes of transport or transport route. The extracted cell information from the NUR records provides the source information. From these records, a subset may be identified that relate to events generated from moving handsets and these are identified at step 430. For example, moving handsets may be determined from those having start and end cells that are different or a large distance apart, and not necessarily neighbouring cells. Database 140 may provide transport data or data relating to particular transport routes and their locations. At step 450, the identified moving handset NUR records may be matched with particular transport modes or routes using the data from database 140. For example, a NUR data record having two or more different cells for a particular event where the cells are placed along a train route and the start and end times of the event indicate that the mobile was travelling at the speed of a moving train, then such a record may be matched with the particular train route. This information may be used to categorise or provide one or several inputs to the categorisation algorithm 1150 shown in figure 4.

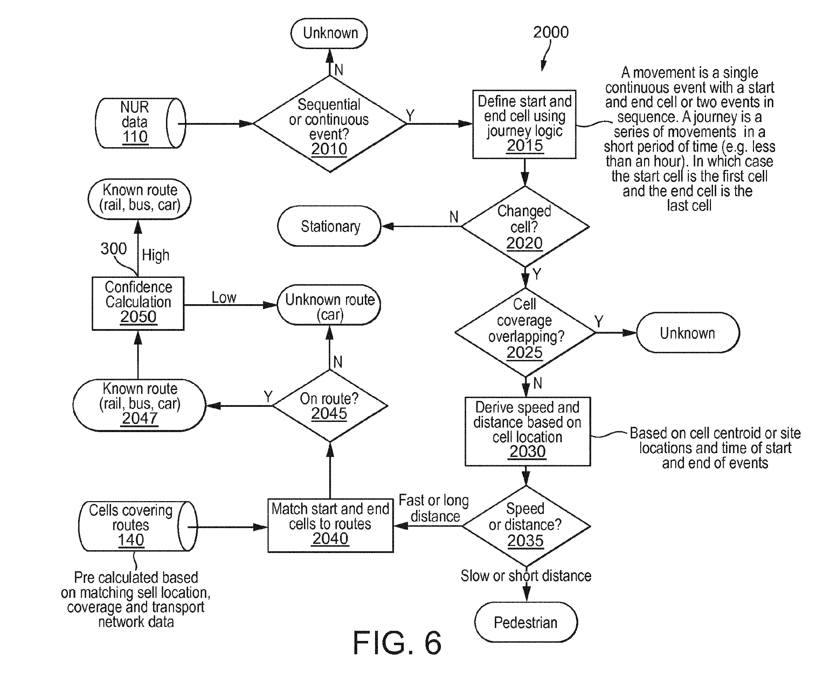

Figure 6 shows a flowchart of a method or algorithm 2000 for detecting traffic in a transport network similar to method 400 described in figure 5, but showing more detail and including more detailed logical procedures or steps that may be carried out. However, whilst figure 6 shows more detail, other steps may be used as well but are omitted from this figure, for clarity.

NUR data 110 are analysed at step 2010 to determine which NUR data records relate to sequential or continuous events. In other words, this step 2010 determines whether the originating mobile device produced a series of NUR records 10 defining a single event or one NUR record 10 providing details of a continuous event. Step 2015 defines and extracts a start and end cell. A movement may be a single continuous event having a start and end cell (or two or more events in sequence). A journey may be defined as a series of movements in a short period of time (e.g. less than an hour), in which case, the start cell may be the first cell and the end cell may be the last cell.

Step 2020 determines whether the cell ID and/or cell location changed during the event. If not, then the device is determined to be stationary and the NUR record 10 is not considered further or filtered out. At step 2025, it is determined whether the cell coverage between the first cell and end or last cell overlaps. Where there is an overlap, then the NUR record 10 is excluded as this may be due to a stationary mobile device. At step 2030, speed and distance values may be derived based on cell location that may be extracted from the NUR record 10 or by looking up cell locations from a cell database. For example, an event lasting one minute and having a first cell location and last cell location (or their coverage centres) 1 km apart will be deemed to be derived from a mobile device travelling at 1 km/min or 60 km/hr.

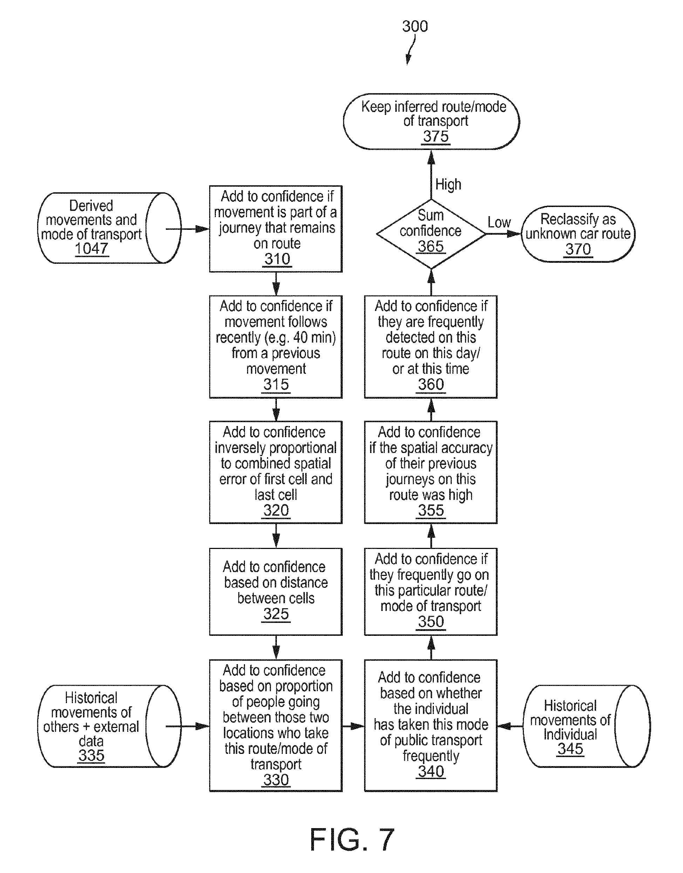

At step 2035, a filter may be applied to remove short distance changes or slow moving devices. For example, a predetermined speed or distance may be used to filter out NUR records 10 relating to calls made by pedestrians. For those moving events meeting or exceeding such predetermined thresholds, then matching of start and end or last cells to routes is carried out at step 2040. Transport database 140 may contain precalculated routes based on matching known cell locations, coverage and transport network data and this information may be used during the matching step 2040. Step 2045 determines whether the event occurred on a known route or an unknown route. For known routes 2047, a confidence checking calculation 2050 may be applied (if required) to provide a confidence level for each result or match. This procedure is described in further detail in relation to a confidence checking method 300 described with reference to figure 7. A threshold may be applied to the confidence level. Records meeting or exceeding such a confidence threshold may be retained or considered in further analysis, whereas records that do not meet such a threshold may be discarded. The threshold may be adjusted as necessary.

A record filtered out during method 300 may be considered separately during the categorisation method 100, 1000 and may contribute to analysis of non-transport type criteria, for example.

Figure 7 shows a flowchart illustrating the confidence checking method or algorithm 300 described with reference to figure 6. The known routes or derived movements and modes of transport 1047 are provided to the algorithm 300. The following steps are used to calculate a confidence measure or metric resulting in an overall confidence level. At step 310, confidence is added if it is determined that a particular journey remains on a known route. Step 315 adds to the confidence level if the detected movement is close in time to a previous movement. Confidence is inversely proportional to a combined spatial area of the first cell and last cell. Therefore, confidence may be reduced at step 320, which calculates such a spatial area. At step 325, confidence is increased or added based on distance between cells. A database 335 contains historical movements of other mobile device users as well as external data. Therefore, step 330 adds to the confidence level depending on a proportion of people going between the same or similar locations identified for the particular record under consideration who take this particular route and mode of transport.

Database 345 contains historical movements for particular individuals. Therefore, confidence is increased based on whether the particular individual has taken this mode of transport frequently as defined by thresholds or other techniques. Similarly, the confidence rate is increased at step 350 if the particular user frequently (again, as compared with a threshold to define "frequent" or "infrequent") uses this particular mode or route of transport. Step 355 increases the level of confidence if the determined spatial accuracy of a particular user's previous journeys on this route was high. Confidence is also increased at step 360 if the particular user is detected or known from historical movements on the particular route on this day or time of day. At step 365, a sum of all the confidence levels determined by the previous steps may be made. When a confidence sum is high, then the particular inferred route/mode of transport is kept or retained in a database at step 375. For low confidence levels, then steps 370 reclassifies or rejects the particular derived movement or mode of transport. In this way, matched network usage records with particular transport routes may be filtered by applying particular confidence thresholds to those matched data. Increasing the number of records analysed and filtering out lower confidence level results will therefore improve reliability and accuracy for the transport route or mode calculations. The various thresholds and comparison data used to calculate confidence may be tuned or adjusted based on feedback from external checking mechanisms with the aim to reduce the number of rejected but accurate results or to reduce the number of inaccurate results that are admitted into the retained set.

The filtered out or rejected records may still be used to contribute to non-travel category assignment.

As will be appreciated by the skilled person, details of the above embodiment may be varied without departing from the scope of the present invention, as defined by the appended claims.

For example, the NUR records may contain other information. This may include GPS or other location data obtained from the mobile device and recorded at various stages and times during a call.

NUR records may include call detail records (CDR) generated, recorded and stored for particular events especially related to calls and SMS transmissions. For data events the NUR records may be xDR records generated for similar purposes. In other words, specific implementations of the methods and systems described throughout may use CDR and/or xDR data as the network usage records. Furthermore, NUR may include event records other than CDR and/or xDR data.

The NUR records may be sampled or analysed in real-time, near real-time or using stored or archive data.

The methods may further comprise the step of matching each of the transport routes with a transport mode using transport mode map data. Each route may have a particular mode. Therefore, the usage of such transport mode or modes may be detected and analysed for inclusion in the categorisation assignment.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method of assigning a category to a user comprising the steps of:
obtaining network usage records from a mobile network;
extracting cell information from the network usage records;
determining location information from the extracted cell information;
generating one or more user behaviour attributes from the determined location information; and
assigning a user category to the user based on the one or more user behaviour attributes.

2. The method of claim 1, wherein the location information includes time spent at the determined location.

3. The method of claim 1 or claim 2, wherein the location information includes the visit frequency of the determined location.

4. The method according to any previous claim, wherein assigning the user category is further based on a plurality of determined locations spread over a time segment extracted from the cell information for the user.

5. The method according to any previous claim, wherein assigning the user category further comprises detecting one or more modes of transport used by the user from the extracted cell information.

6. The method of claim 5, wherein detecting the one or more modes of transport further comprises the steps of:
identifying the network usage records originating from moving handsets from the extracted cell information; and
matching the identified network usage records with one or more transport modes.

7. The method of claim 6, wherein matching the identified network usage records further comprises comparing the locations of cellular base stations recorded in the identified network usage records with predetermined transport routes.

8. The method of claim 7, wherein the predetermined transport routes are scheduled transport routes.

9. The method according to any previous claim, wherein assigning the user category is further based on a travel distance calculated from the determined location information.

10. The method according to any previous claim, wherein assigning the user category is further based on a distribution of determined locations.

11. The method according to any previous claim, wherein assigning the user category is further based on time information extracted from the network usage records.

12. The method according to any previous claim, wherein assigning the user category is further based on the most common determined location information for the user.

13. The method according to any previous claim further comprising the step of calculating a radius of gyration of the determined location information and wherein assigning the user category is further based on the calculated radius of gyration.

14. The method according to any previous claim further comprising the step of sending one or more messages to one or more users based on their user category.

15. A computer program comprising program instructions that, when executed on a computer cause the computer to perform the method of any of claims 1 to 14.
